Europäisches Patentamt

European Patent Office

Office européen des brevets

(19)

(11) **EP 1 085 689 B1**

(12) **FASCICULE DE BREVET EUROPEEN**

(45) Date de publication et mention
de la délivrance du brevet:
**21.05.2003 Bulletin 2003/21**

(51) Int Cl.$^7$: **H04L 5/02**

(21) Numéro de dépôt: **99402240.8**

(22) Date de dépôt: **13.09.1999**

(54) **Attribution de séquences d'étalement dans un système multiporteur d'accès multiple par répartion de codes (MCCDMA)**

Zuweisung von Spreizfolgen in einem MCCDMA-System

Assignment of spreading sequences in an MCCDMA system

(84) Etats contractants désignés:
**AT BE CH CY DE DK ES FI FR GB GR IE IT LI LU
MC NL PT SE**

(43) Date de publication de la demande:
**21.03.2001 Bulletin 2001/12**

(73) Titulaire: **Mitsubishi Electric Information
Technology Centre Europe B.V.
1119 NS Schiphol Rijk (NL)**

(72) Inventeurs:
 • **Mottier, David
 35700 Rennes (FR)**
 • **Castelain, Damien
 35700 Rennes (FR)**

(74) Mandataire: **Maillet, Alain
 SCP Le Guen & Maillet,
 5, Place Newquay,
 B.P. 70250
 35802 Dinard Cedex (FR)**

(56) Documents cités:
 **EP-A- 0 837 565          WO-A-99/03224**

 • **HIDEKI OCHIAI, HIDEKI IMAI: "OFDM-CDMA with
 peak power reduction based on the spreading
 sequences" IEEE INTERNATIONAL
 CONFERENCE ON COMMUNICATIONS, 7 - 11
 juin 1998, pages 1299-1303-1303vol3,
 XP002118739 New York, US ISBN: 0-7803-4789-7**
 • **POPOVIC: "Spreading sequences for
 multi-carrier CDMA systems" IEE COLLOQUIUM
 ON CDMA TECHNIQUES AND APPLICATIONS
 FOR THIRD GENERATION MOBILE SYSTEMS,19
 mai 1997 (1997-05-19), pages 1-6, XP000770002
 Stevenage, GB**

EP 1 085 689 B1

## Description

La présente invention concerne un procédé d'attribution d'une séquence d'étalement à un utilisateur d'un réseau de télécommunications, tel qu'un réseau de transmission à porteuses multiples et à accès multiples par répartition de codes, plus connu sous le nom de réseau MC-CDMA (Multi-Carrier Coded Division Multiple Access).

Parmi les nouveaux systèmes de communication permettant de gérer simultanément et dans une même bande de fréquences plusieurs communications entre des utilisateurs distincts, on connaît la technique de transmission à porteuses multiples et à accès multiples par répartition de codes, plus connue sous le nom de technique MC-CDMA. Cette technique de transmission combine à la fois les principes de la transmission par multiplexage de fréquences orthogonales connus sous le nom OFDM (Orthogonal Frequency Division Multiplex) et ceux de la technique d'Accès Multiple par Répartition de Codes (AMRC) ou CDMA (Code Division Multiple Access).

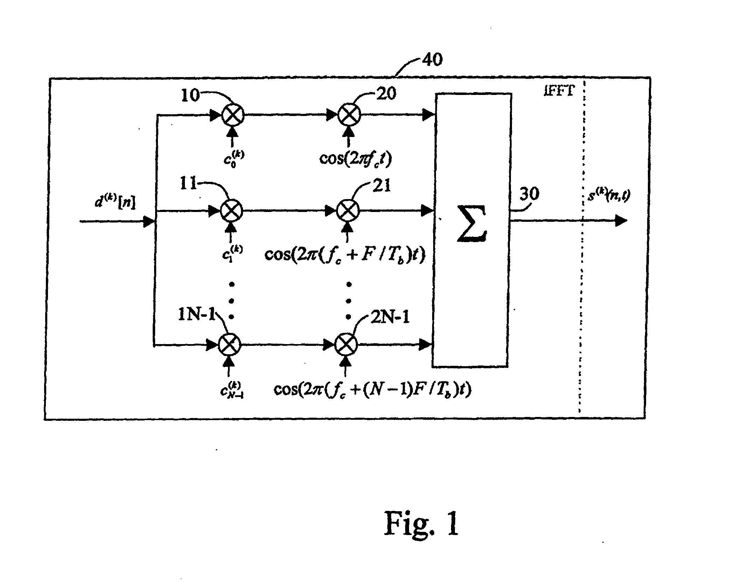

On a représenté à la Fig. 1 un schéma synoptique illustrant un exemple de fonctionnement d'un émetteur utilisant la technique de transmission MC-CDMA. Cet exemple est représentatif d'une transmission en voie descendante, c'est-à-dire d'une station de base vers une station mobile. La $n$-ième donnée du $k$-ième utilisateur $d^{(k)}[n]$ est fournie à des multiplicateurs 10 à 1N-1 respectivement prévus pour la multiplier aux éléments $c^{(k)}_m$ ($m$ étant compris entre $0$ et $N-1$) d'une séquence dite séquence d'étalement puis à des modulateurs 20 à 2N-1 pour respectivement la moduler sur des sous-porteuses à la fréquence $(f_c + m.F/T_b)$ où $f_c$ est la fréquence originale du signal émis, $F/T_b$ est l'espacement entre deux sous-porteuses consécutives, $F$ étant un entier et $T_b$ étant la durée de la donnée $d^{(k)}[n]$, hors un intervalle de garde. L'ensemble des sous-porteuses est additionné dans un additionneur 30 pour former le signal émis $s^{(k)}(n,t)$ qui peut donc s'exprimer sous la forme :

$$s^{(k)}(n,t) = d^{(k)}[n] \sum_{m=0}^{N-1} c^{(k)}_m \cos[2\pi(f_c + m\frac{F}{T_b})t] \quad \text{si } t \subset [0, T_b]$$

$$s^{(k)}(n,t) = 0$$

sinon

On notera que, dans cet exemple particulier, l'ensemble des modulateurs 20 à 2N-1 et de l'additionneur 30 peut être mis en oeuvre par une transformée de Fourrier inverse.

On notera que, pour des raisons de clarté, on a considéré que la longueur $N$ de chaque séquence d'étalement est égale au nombre $M$ de sous-porteuses de modulation, ce qui n'est pas nécessairement le cas dans tout système MC-CDMA.

On fait également l'hypothèse, pour des raisons de clarté, qu'une seule séquence d'étalement est attribuée par utilisateur, ce qui n'est pas nécessairement le cas.

On sait que le canal de propagation peut être obstrué par des habitations et autres obstacles situés entre l'émetteur et le récepteur. Le signal émis se trouve alors propagé en trajets multiples, chacun des trajets étant différemment retardé et atténué. On comprendra que le canal de propagation agit alors comme un filtre dont la fonction de transfert $h(f,t)$ varie dans le temps.

La contribution notée $s_m$ au signal émis $s(n,t)$ de chaque porteuse $m$ de données $d$ destinées à $K$ utilisateurs peut s'exprimer de la manière suivante :

$$s_m = \sum_{k=1}^{K} d^{(k)} c^{(k)}_m$$

Compte tenu de l'atténuation complexe notée $h_m^{(p)}$ induite par le canal de transmission au niveau du récepteur de l'utilisateur de rang $p$, le signal reçu, dans le cas synchrone et en voie descendante, sur chaque sous-porteuse de rang $m$ peut alors s'exprimer comme suit :

$$r_m^{(p)} = h_m^{(p)} \sum_{k=1}^{K} \left( d^{(k)} c^{(k)}_m \right) + n_m^{(p)}$$

2

où $n^{(p)}_m$ représente l'échantillon de bruit blanc additif gaussien sur la porteuse de rang $m$.

L'aptitude des systèmes de transmission MC-CDMA à assurer l'orthogonalité entre les signaux des différents utilisateurs dans le réseau (et donc à empêcher toute interférence entre ces signaux) dépend des propriétés d'intercorrélation des séquences d'étalement qui sont attribuées aux utilisateurs du réseau.

Typiquement, dans le cas des transmissions sur canal radiomobile d'une station de base vers un ensemble de stations mobiles, les signaux destinés à chaque utilisateur sont émis de manière synchrone. Dans ces conditions, des séquences d'étalement de Walsh-Hadamard peuvent être utilisées pour garantir une orthogonalité entre les utilisateurs si le canal n'est pas sélectif en fréquence.

L'article de HIDEKI OCHIAI et al.: "OFDM-CDMA with peak power réduction based on the spreading sequences" IEEE INTERNATIONAL CONFERENCE ON COMMUNICATIONS, 7-11 juin 1998, pages 1299-1303, vol3, XP002118739 New York, US. décrit des méthodes de construction d'ensembles de telles séquences.

Dans les systèmes MC-CDMA connus, l'attribution des séquences d'étalement n'obéit pas, pour une même famille de séquences d'étalement (séquences de Walsh-Hadamard de longueur N, séquences de Gold, etc.), à des règles précises afin que les interférences liées à la sélectivité fréquentielle du canal soient minimisées.

Or, précisément, la présente invention est basée sur l'idée que le signal qui est reçu par un récepteur d'un système MC-CDMA comporte une composante qui est liée aux interférences avec les autres utilisateurs, interférences qui, contrairement à ce qui est communément admis, dépendent des séquences attribuées à ces utilisateurs dans la même famille de séquences utilisées par le système de transmission.

En effet, après désétalement, le signal $v^{(p)}$ reçu par l'utilisateur $p$ peut s'exprimer sous la forme :

$$v^{(p)} = \sum_{m=1}^{N} c_m^{(p)} \left[ h_m^{(p)} \sum_{k=1}^{K} \left( d^{(k)} c_m^{(k)} \right) + n_m^{(p)} \right]$$

$$= \sum_{1}^{N} \left( h_m^{(p)} \sum_{k=1}^{K} \left( c_m^{(p)} c_m^{(k)} d^{(k)} \right) + z_m^{(p)} \right)$$

$$= d^{(p)} \sum_{m=1}^{N} h_m^{(p)} + \sum_{k=1, k \neq p}^{K} d^{(k)} \sum_{m=1}^{N} \left( h_m^{(p)} c_m^{(p)} c_m^{(k)} \right) + \sum_{m=1}^{N} z_m^{(p)}$$

On suppose ici que $|c_m^{(p)}|^2 = 1$ et l'on note $z_m^{(p)} = n_m^{(p)} \times c_m^{(p)}$.

On constate que trois contributions sont ainsi mises en évidence dans l'expression du signal reçu par l'utilisateur $p$ : le signal désiré (premier terme), une interférence associée à la présence d'autres utilisateurs (deuxième terme) et un bruit (troisième terme).

On peut encore écrire la relation ci-dessus sous la forme :

$$v^{(p)} = d^{(p)} \sum_{m=1}^{N} h_m^{(p)} + \sum_{k=1, k \neq p}^{K} d^{(k)} I(h, p, k) + \sum_{m=1}^{N} z_m^{(p)}$$

où le terme $I(h,p,k)$ est un terme d'interférence représentatif de l'ensemble des interférences induites entre les deux séquences d'indice $p$ et $k$ en prenant en compte la sélectivité fréquentielle du canal au niveau du récepteur de l'utilisateur de la séquence d'indice $p$ et qui est donc égal à

$$\sum_{m=1}^{N} h_m^{(p)} c_m^{(p)} c_m^{(k)}.$$

Pour corriger l'influence de ces interférences avec les autres utilisateurs, il est connu de mettre en oeuvre, au niveau du récepteur, une étape d'égalisation dont le coefficient d'égalisation $g_m$ prend une valeur complexe qui affecte chaque porteuse de rang $m$ si bien que la fonction de transfert apparente $h_m^{(p)}$ du canal de transmission vue par le récepteur, peut s'écrire sous la forme :

$$h_m^{'(p)} = h_m^{(p)} \times g_m$$

Le terme d'interférence modifié $I'(h, p, k)$ résultant du fait de la distorsion apportée par le canal de transmission s'écrit maintenant :

$$I'(h, p, k) = \sum_{m=1}^{N} h_m^{'(p)} c_m^{(p)} c_m^{(k)}$$

Une première approche simpliste de l'égalisation consiste à rendre la fonction de transfert apparent $h_m^{'(p)}$ égal à 1 afin de restaurer parfaitement l'orthogonalité. Cependant, cette approche n'est pas utilisée car elle augmente le bruit de manière trop importante, ce qui dégrade les performances du système de transmission. En pratique, l'égalisation assure un compromis entre la restauration de l'orthogonalité, c'est-à-dire la diminution des interférences entre utilisateurs, et la minimisation des effets du bruit. L'interférence n'est donc jamais supprimée totalement.

Le but de l'invention est donc de proposer un procédé qui permette d'atténuer les effets du terme perturbateur (le second dans l'équation précédente) sur les performances du système de transmission considéré.

A cet effet, la présente invention concerne un procédé d'attribution d'une ou de plusieurs séquences d'étalement à un utilisateur d'un réseau de transmission à porteuses multiples et à accès multiples par répartition de codes. Ce procédé est caractérisé en ce qu'il consiste à attribuer audit utilisateur ladite ou lesdites séquences d'étalement en tenant compte d'un ensemble de séquences d'étalement prédéterminé parmi un ensemble de séquences possibles.

Les caractéristiques de l'invention apparaîtront plus clairement à la lecture de la description suivante d'un exemple de réalisation, ladite description étant faite en relation avec les dessins joints, parmi lesquels :

La Fig. 1 est un schéma synoptique d'un exemple d'émetteur d'un système de transmission MC-CDMA, et
La Fig. 2 est un exemple d'un graphe montrant la réponse en amplitude d'un récepteur d'un système MC-CDMA, et
La Fig. 3 est un tableau donnant le nombre de transitions du produit élément à élément de deux séquences de Walsh-Hadamard de longueur 8, ledit tableau permettant l'illustration du procédé de la présente invention.

Dans un système de transmission MC-CDMA, un utilisateur se voit attribuer, soit au moment de l'initiation d'un appel, soit en cours de communication, une ou plusieurs séquences d'étalement dont, au niveau de l'émetteur du système, chaque élément est multiplié par la donnée à transmettre de manière à piloter un modulateur fonctionnant sur une sous-porteuse correspondante comme cela a déjà été explicité dans le préambule de la présente description.

La présente invention consiste à attribuer cette ou ces séquences d'étalement en tenant compte d'un ensemble de séquences prédéterminé, comme par exemple l'ensemble des séquences déjà utilisées, notamment par d'autres utilisateurs au moment considéré et/ou un ensemble de séquences potentiellement utilisables à l'avenir.

On montre ci-dessous, au moyen d'un exemple simplifié, que l'attribution des séquences selon la présente invention permet d'optimiser les performances du système de transmission.

Dans cet exemple, on considère deux utilisateurs actifs si bien que le signal reçu $v^{(p)}$ peut s'exprimer de la manière suivante :

$$v^{(1)} = d^{(1)} \sum_{m=1}^{N} h_m^{(1)} + d^{(J)} I(h, 1, j) + \sum_{m=1}^{N} z_m^{(1)}$$

en l'absence d'égalisation, et

$$v^{(1)} = d^{(1)} \sum_{m=1}^{N} h_m^{(1)} + d^{(J)} I'(h, 1, j) + \sum_{m=1}^{N} z_m^{'(1)}$$

en présence d'égalisation, le terme $z_m^{'(1)}$ représentant le bruit sur la porteuse de rang $m$ ayant subi le processus d'égalisation mis en oeuvre.

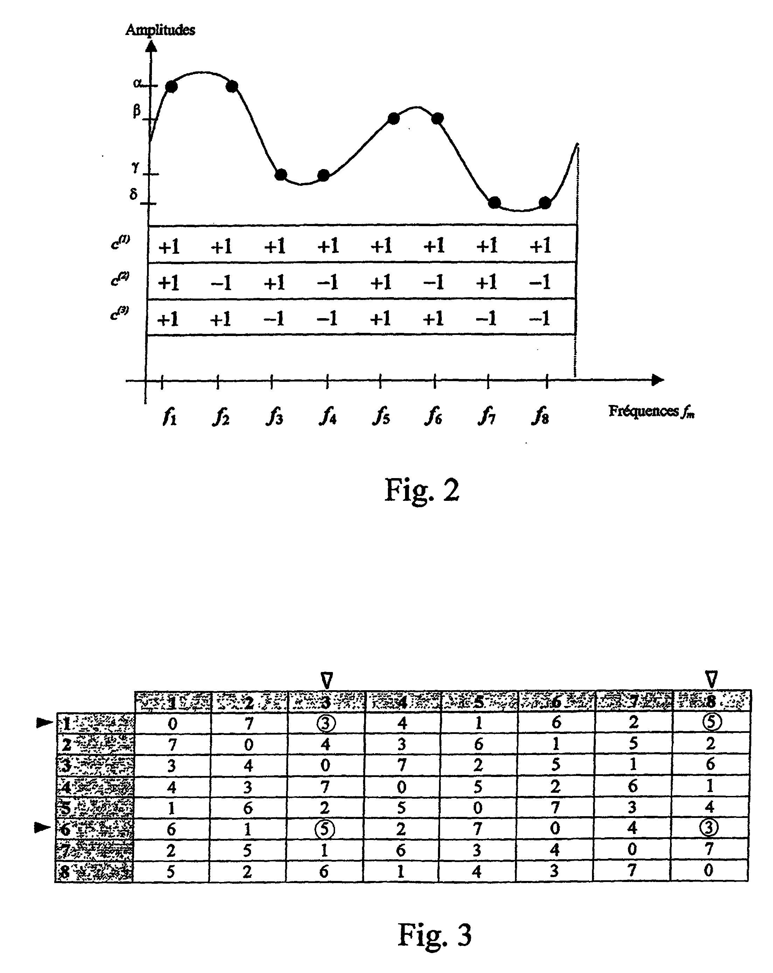

On a représenté à la Fig. 2, un exemple de réponse spectrale en amplitude d'un canal de transmission d'un système de transmission MC-CDMA dont le nombre de sous-porteuses $f_1$ à $f_8$ est de 8. Les amplitudes des signaux reçus pour ces fréquences $f_1$ à $f_8$ sont respectivement α, α, γ, γ, β, β, δ et δ.

La séquence d'étalement de l'utilisateur 1 est la séquence de Walsh-Hadamard de longueur 8 suivante :

$$c^{(1)} = (+1, +1,+1,+1,+1,+1,+1,+1)$$

Après passage dans le canal dont on suppose ici la contribution limitée à sa seule composante réelle (ce qui consiste à considérer une égalisation parfaite de la distorsion en phase), l'impact sur la séquence de l'utilisateur 1 s'écrit :

$$h^{'(1)}c^{(1)} = (+\alpha, +\alpha, +\gamma, +\gamma, +\beta, +\beta, +\delta, +\delta)$$

La séquence $c^{(1)}$ étant utilisée et la longueur des séquences étant de 8, 7 autres séquences orthogonales à la séquence $c^{(1)}$ restent disponibles.

Si c'est la séquence $c^{(2)}$ = (+1, -1, +1, -1, +1, -1, +1, -1) qui est attribuée au second utilisateur, le signal reçu par le premier utilisateur est :

$$v^{(1)} = d^{(1)}\sum_{m=1}^{N} h_m^{'(1)} + d^{(2)}\sum_{m=1}^{N} h_m^{'(1)} c_m^{(1)} c_m^{(2)} + \sum_{m=1}^{N} z_m^{'(1)}$$

$$= 2(\alpha + \beta + \gamma + \delta)d^{(1)} + (\alpha \cdot 0 + \beta \cdot 0 + \gamma \cdot 0 + \delta \cdot 0)d^{(2)} + \sum_{m=1}^{N} z_m^{'(1)}$$

$$= 2(\alpha + \beta + \gamma + \delta)d^{(1)} + \sum z_m^{'(1)}$$

On peut constater que l'estimation de la donnée $d^{(1)}$ de l'utilisateur 1 ne dépend pas des données du second utilisateur.

Par contre, si c'est la séquence $c^{(3)}$ = (+1, +1, -1, -1, +1, +1, -1, -1) qui est attribuée au second utilisateur, le signal reçu par le premier utilisateur est :

$$v^{(1)} = d^{(1)}\sum_{m=1}^{N} h_m^{'(1)} + d^{(3)}\sum_{m=1}^{N} h_m^{'(1)} c_m^{(1)} c_m^{(3)} + \sum_{m=1}^{N} z_m^{'(1)}$$

$$= 2(\alpha + \beta + \gamma + \delta)d^{(1)} + 2(\alpha - \beta + \gamma - \delta)d^{(3)} + \sum_{m=1}^{N} z_m^{'(1)}$$

On constate alors que l'estimation de la donnée $d^{(1)}$ de l'utilisateur 1 dépend cette fois-ci de la donnée du second utilisateur.

On montre ainsi qu'étant donné un canal de propagation et une famille de séquences d'étalement avec des propriétés d'intercorrélation identiques sans dégradation de canal, l'interférence entre utilisateurs liée à la propagation du signal en trajets multiples dépend du choix des séquences d'étalement utilisées parmi cette famille.

Ainsi, le choix d'une séquence particulière en fonction de celles qui ont déjà été attribuées permet d'optimiser les performances du système de transmission. Mais ce choix peut également se faire en tenant compte des séquences susceptibles d'être utilisées plus tard, permettant ainsi d'optimiser à l'avenir les performances du système de transmission.

L'attribution des séquences d'étalement peut être uniforme à tous les utilisateurs, et dans ce cas, elle permet d'optimiser une qualité moyenne des performances de transmission pour l'ensemble des utilisateurs actifs.

Elle peut également être au contraire non uniforme et dans ce cas, elle permet d'optimiser la transmission de certaines séquences par rapport à d'autres, et d'ainsi différencier ces séquences, par exemple en terme de qualité de service ou autre critère.

Dans le cas d'une attribution uniforme et selon une caractéristique de la présente invention, on attribue à un utilisateur, parmi toutes les séquences d'étalement disponibles au moment de cette attribution, la séquence d'étalement

$c^{(i)}$ qui minimise une fonction $J^{(i,\Omega_k)}$, dite fonction de coût, représentative de l'interférence entre la séquence d'étalement $c^{(i)}$ et les séquences d'étalement $c^{(k)}$ d'un ensemble prédéterminé ou déterminé de séquences dont les indices appartiennent à l'ensemble d'indices $\Omega_k$. Ainsi, la séquence de rang $i$ est attribuée si ce rang $i$ vérifie la relation suivante :

$$i = \arg_{j} \min_{j \in \Omega_j, j \in \Omega_k} \left[ J^{(j,\Omega_k)} \right]$$

où $\Omega_j$ est l'ensemble des indices des séquences disponibles.

Par exemple, la fonction de coût $J^{(j,\Omega_k)}$ représentative de l'interférence entre la séquence d'étalement $c^{(l)}$ et des séquences dont les indices appartiennent à un ensemble $\Omega_k$ peut être définie comme étant égale à la valeur maximale prise par une fonction $D^{(j,k)}$ représentative de la dégradation de la transmission qui est induite suite à l'interférence entre la séquence d'étalement d'indice $j$ et la séquence d'étalement $c^{(k)}$ d'indices $k$, pour un indice $k$ appartenant à l'ensemble $\Omega_k$ prédéterminé :

$$J^{(j,\Omega_k)} = \max_{k \in \Omega_k} D^{(j,k)}$$

La fonction de coût pourrait également être égale à la moyenne des valeurs prises par cette fonction de dégradation :

$$J^{(j,\Omega_k)} = \frac{1}{K} \sum_{k \in \Omega_k} D^{(j,k)}$$

où $K$ est le nombre d'indices de l'ensemble prédéterminé $\Omega_k$.

Par exemple, la fonction de dégradation $D^{(j,k)}$ est définie comme suit :

$$D^{(j,k)} = E\left[ \left( \sum_{m=1}^{M} h_m'^{(j)} c_m^{(j)} c_m^{(k)} \right)^2 \right] \text{ ou bien } D^{(j,k)} = E\left[ \left( \sum_{m=1}^{M} h_m'^{(k)} c_m^{(j)} c_m^{(k)} \right)^2 \right]$$

où $E$ est l'espérance mathématique.

On rappelle ici que $M$ est le nombre de sous-porteuses mises en oeuvre dans le système de transmission MC-CDMA et $h'^{(j)}$ est soit la réponse du canal de transmission (également notée $h^{(j)}$ dans le préambule de la présente description), soit $_m$ la réponse apparente du canal de transmission compte tenu d'un processus d'égalisation mis en oeuvre dans le récepteur, réponse pour la fréquence de la sous-porteuse de rang $m$ et pour le récepteur de l'utilisateur de la séquence de rang $j$.

Une autre possibilité est de choisir $D^{(j,k)}$ comme étant représentative de la faible importance des composantes haute fréquence d'une séquence $\chi^{(j,k)}$ de $N$ éléments résultant du produit élément à élément de la séquence $c^{(l)}$ avec la séquence $c^{(k)}$. En particulier, plus les composantes haute-fréquence de cette séquence $\chi^{(j,kj)}$ sont nombreuses et plus faible est la fonction de dégradation $D^{(j,k)}$.

L'importance des composantes haute-fréquence au regard des autres composantes peut être mesurée en utilisant une transformée de Fourier.

Elle peut également être mesurée en considérant le *nombre* de transitions {+1,-1} et {-1,+1} apparaissant dans la séquence $\chi^{(j,k)}$. On aura alors, par exemple :

$$D^{(j,k)} = 1/T(\chi^{(j,k)})$$

où $T(\chi^{(j,k)})$ est le nombre de transitions de la séquence $\chi^{(j,k)}$ résultant du produit élément à élément de la séquence $c^{(j)}$ avec la séquence $c^{(k)}$.

Il y a transition entre le *m*-ième élément et le *m+1*-ième élément de $\chi^{(i,j)}$ si :

$$\text{Sgn}[\chi_m^{(i,j)}] \neq \text{Sgn}[\chi_{m+1}^{(i,j)}]$$

On notera que le nombre de transitions des séquences produits $\chi^{(j,k)}$ est généralement connu à l'avance et dépend de la famille de séquences utilisées par le système de transmission : séquences de Walsh-Hadamard, séquences de Gold, séquences de Kasami, etc. Ce nombre peut être calculé à l'avance et être mémorisé dans une table mémoire pour chaque séquence et pour toutes les séquences produits de cette séquence.

On va maintenant illustrer la mise en oeuvre du procédé de la présente invention dans le cas où la fonction de coût $J^{(j,\Omega_k)}$ est égale à la valeur maximale prise par la fonction de dégradation

$$\left( J^{(j,\Omega_k)} = \max_{k \in \Omega_k} D^{(j,k)} \right)$$

et ladite fonction de dégradation est égale à l'inverse du nombre de transitions de la séquence $\chi^{(j,k)}$ résultant du produit élément à élément de la séquence $c^{(j)}$ avec la séquence $c^{(k)}$.

On a représenté à la Fig. 3, un tableau donnant respectivement en abscisse et en ordonnée le rang des séquences de Walsh-Hadamard et, à l'intersection d'une ligne et d'une colonne, le nombre de transitions de la séquence produit élément à élément des deux séquences respectivement affectées à ladite ligne et à ladite colonne.

Considérons un moment où seules les séquences de rang 1 et 6 sont utilisées. La détermination de la séquence à attribuer au prochain utilisateur se fera en considérant un ensemble prédéterminé égal à l'ensemble des séquences déjà utilisées. Les valeurs de *j* sont donc égales à 1 et 6. Pour *i*=2, les nombres de transitions $T(\chi^{(2,1)})$ et $T(\chi^{(2,6)})$ sont respectivement égaux à 7 et 1. La valeur maximale de la dégradation est donc 1.

Pour *i* = 3, les nombres de transitions $T(\chi^{(3,1)})$ et $T(\chi^{(3,6)})$ sont respectivement égaux à 3 et 5. La valeur maximale de la dégradation est donc 1/3.

Pour *i* = 4, les nombres de transitions $T(\chi^{(4,1)})$ et $T(\chi^{(4,6)})$ sont respectivement égaux à 4 et 2. La valeur maximale de la dégradation est donc 1/2.

On procède ainsi pour les autres valeurs de *i*. La liste des valeurs maximales de la dégradation (ou coût) est donc

| *i* | 2 | **3** | 4 | 5 | 7 | **8** |
|---|---|---|---|---|---|---|
| $J^{(j,\Omega_k)}$ | 1 | **1/3** | 1/2 | 1 | ½ | **1/3** |

La séquence d'étalement dont la valeur du coût $J^{(j,\Omega_k)}$ est minimale est alors choisie. Ici, deux séquences peuvent être choisies : 3 et 8. Le choix entre les deux peut être arbitraire ou non.

Selon la présente invention, on attribue, à chaque utilisateur, au moins une séquence d'étalement de manière à tenir compte de la qualité de transmission envisagée pour cette séquence ou ces séquences. L'attribution est alors dite non-uniforme.

Par exemple, à un utilisateur désirant une bonne qualité relative de transmission, on attribue la séquence d'étalement $c^{(j)}$ qui minimise la fonction de coût $J^{(j,\Omega_k)}$ avec les séquences d'étalement $c^{(k)}$ d'un ensemble prédéterminé ou déterminé de séquences d'indice *k* appartenant à un ensemble $\Omega_k$. A un utilisateur désirant une qualité de transmission moyenne, on attribue la séquence d'étalement $c^{(i)}$ qui donne une valeur moyenne à la fonction de coût $J^{(j,\Omega_k)}$ avec les séquences d'étalement $c^{(k)}$ d'un ensemble prédéterminé ou déterminé de séquences d'indice *k* appartenant à un ensemble $\Omega_k$. Quant à un utilisateur dont la qualité de transmission peut être minimum, on pourra attribuer la séquence d'étalement $c^{(i)}$ sans se soucier de la distorsion sur cette séquence.

Selon la présente invention, on attribue à chaque utilisateur au moins une séquence d'étalement de manière à tenir compte de la qualité de transmission envisagée pour les séquences appartenant à un ensemble prédéterminé de séquences.

Dans ce cas, l'ensemble prédéterminé des séquences d'étalement $c^{(k)}$ d'indices *k* appartenant à un ensemble $\Omega_k$ considéré au moment de l'attribution d'une séquence peut être constitué des séquences d'étalement qui sont déjà utilisées au moment de cette attribution.

Dans ce cas, étant donné un nombre *K* de séquences d'étalement préalablement utilisées, la règle d'attribution d'une nouvelle séquence consiste à allouer parmi les séquences d'étalement disponibles, la séquence d'étalement $c^{(i)}$

qui minimise la fonction de coût $J^{(j,\Omega_k)}$ représentative de l'interférence entre la séquence d'étalement $c^{(l)}$ et les $K$ séquences d'étalement déjà utilisées $c^{(k)}$ d'indices $k$ appartenant à l'ensemble $\Omega_k$.

$$i = \arg \min_{j \in \Omega_j} \left\lfloor J^{(j,\Omega_k)} \right\rfloor \quad pour \ K \geq 2$$

L'ensemble prédéterminé des séquences $c^{(k)}$ peut également être constitué des séquences d'étalement qui sont potentiellement utilisables à l'avenir, seules ou en combinaison avec les séquences précédentes. Cela peut être le cas à tout moment, mais également lors de l'attribution de la première séquence d'étalement.

La règle d'attribution de la première séquence d'étalement consiste à allouer parmi les séquences d'étalement disponibles, la séquence d'étalement $c^{(i)}$ qui minimise la fonction de coût $J^{(i,\Omega_k)}$ représentative de l'interférence entre la séquence d'étalement $i$ et les séquences d'étalement $c^{(k)}$ potentiellement utilisables à l'avenir d'indices $k$ appartenant à l'ensemble $\Omega_k$. La $i$-ème séquence d'étalement $c^{(i)}$ est attribuée si :

$$i = \arg \min_{j \in \Omega_j} \left\lfloor J^{(j,\Omega_k)} \right\rfloor$$

où $\Omega_j$ est l'ensemble des indices des séquences disponibles.

La règle d'attribution d'une nouvelle séquence d'étalement peut également favoriser la transmission d'une séquence $i_0$ déjà attribuée. L'ensemble prédéterminé de séquences d'étalement est alors constitué de cette seule séquence.

Ainsi, étant donné un nombre $K$ de séquences d'étalement préalablement attribuées comprenant la séquence $c^{(j0)}$, la règle d'attribution d'une nouvelle séquence consiste à allouer parmi les séquences disponibles, la séquence d'étalement $c^{(i)}$ qui mimimise la fonction de coût $J^{(i,j0)}$ représentative de l'interférence entre la séquence d'étalement $i$ et la séquence d'étalement $c^{(io)}$ dont il faut favoriser la transmission. La $i$-ème séquence d'étalement $c^{(i)}$ est attribuée si :

$$i = \arg \min_{j \in \Omega_j} \left\lfloor J^{(j,i_0)} \right\rfloor \quad pour \ i_0 \in \Omega, j \neq i_0, K \geq 2$$

Selon une autre caractéristique de la présente invention, le procédé de la présente invention consiste à réattribuer en cours de transmission, à des moments déterminés, les K-Q séquences encore nécessaires pour les différentes transmissions, K étant le nombre de séquences d'étalement préalablement utilisées avant que Q séquences parmi K (Q<K) aient été rendues disponibles (par exemple à la suite de la désactivation d'un utilisateur).

Les règles qui sous-tendent le processus de ré-attribution sont les mêmes que celles du processus d'attribution à un utilisateur au moment où celui-ci initie une communication.

Plus particulièrement, ce processus peut être le suivant. Si K-Q > 1, pour satisfaire une ré-attribution des séquences d'étalement qui assure une optimisation uniforme des performances, cette ré-attribution dynamique peut consister à :

-    Calculer les fonctions de coût $J^{(j,\Omega_k)}$ pour toute séquence d'étalement $c^{(j)}$ où $j$ appartient à l'ensemble $\Omega_Q$ des indices des séquences rendues disponibles.
-    Calculer les fonctions de coût $J^{(k,\Omega_k)}$ pour toute séquence d'étalement $c^{(k)}$ où $k$ appartient à $\Omega_{K-Q}$ des indices des séquences encore utilisées.
-    Tant qu'il existe une ou plusieurs séquences d'étalement d'indice $j_0 \in \Omega_Q$ et une ou plusieurs séquences d'étalement d'indice $k_0 \in \Omega_{K-Q}$ telles que $J^{(j0,\Omega_k)} < J^{(k0,\Omega_k)}$, désallouer la séquence $c^{(kM)}$ définie par :

$$k_M = \arg\max_{\substack{k \\ k\in\Omega_{K-Q}}} \left[ J^{(k,\Omega_k)} \right],$$

et allouer à la place la séquence $c^{(k_m)}$ définie par :

$$k_m = \arg\min_{\substack{k \\ k\in\Omega_Q}} \left[ J^{(k,\Omega_k)} \right]$$

Selon un autre exemple, si K-Q > 1 et pour satisfaire une ré-attribution des séquences d'étalement qui favoriserait la transmission de la séquence $i_0$ déjà attribuée, la ré-attribution dynamique peut consister à :

- Calculer les fonctions de coût $J^{(j,i_0)}$ pour toute séquence d'étalement $c^{(j)}$ où $j$ appartient à l'ensemble $\Omega_Q$ des indices des séquences rendues disponibles.
- Calculer les fonctions de coût $J^{(k,i_0)}$ pour toute séquence d'étalement $c^{(k)}$ où $k$ appartient à $\Omega_{K-Q}$ des indices des séquences encore utilisées.
- Tant qu'il existe une ou plusieurs séquences d'étalement d'indice $j_0 \in \Omega_Q$ et une ou plusieurs séquences d'étale- ment d'indice $k_0 \in \Omega_{K-Q}$ telles que $J^{(j_0,i_0)} < J^{(k_0,i_0)}$, désallouer la séquence $c^{(k_M)}$ définie par :

$$k_M = \arg\max_{\substack{k \\ k\in\Omega_{K-Q}}} \left[ J^{(k,i_0)} \right],$$

et allouer à la place la séquence $c^{(k_m)}$ définie par :

$$k_m = \arg\min_{\substack{k \\ k\in\Omega_Q}} \left[ J^{(k,i_0)} \right]$$

**Revendications**

1. Procédé d'attribution d'une ou de plusieurs séquences d'étalement à un utilisateur d'un réseau de transmission à porteuses multiples et à accès multiples par répartition de codes, chaque élément de ladite séquence étant, au niveau d'un émetteur dudit réseau, multiplié par une donnée à transmettre et ensuite transmis sur une sous- porteuse correspondante, **caractérisé en ce qu'**il consiste à attribuer audit utilisateur ladite ou lesdites séquences d'étalement minimisant une fonction représentative de l'interférence entre ladite ou lesdites séquences d'une part et les séquences d'étalement d'un ensemble prédéterminé d'autre part.

2. Procédé d'attribution selon la revendication 1, **caractérisé en ce que** ledit ensemble de séquences d'étalement prédéterminé inclut l'ensemble des séquences qui sont utilisées par ledit réseau au moment de l'attribution.

3. Procédé d'attribution selon la revendication 1 ou 2, **caractérisé en ce que** ledit ensemble de séquences d'étalement prédéterminé inclut l'ensemble des séquences qui sont potentiellement utilisables postérieurement au moment de l'attribution.

4. Procédé d'attribution selon la revendication 1, 2 ou 3, **caractérisé en ce que** ledit ensemble de séquences d'étalement prédéterminé inclut l'ensemble des séquences dont on veut favoriser la transmission.

**5.** Procédé d'attribution selon une des revendications précédentes, **caractérisé en ce qu'**il consiste à allouer, parmi toutes les séquences d'étalement disponibles au moment de l'attribution, la séquence d'étalement $c^{(i)}$ qui minimise ladite fonction représentative de l'interférence entre la séquence d'étalement $c^{(i)}$ et les séquences d'étalement dudit ensemble prédéterminé, la séquence de rang $i$ étant ainsi attribuée si ce rang $i$ vérifie la relation suivante :

$$i = \arg_{j} \min_{j \in \Omega_j, j \notin \Omega_k} \left[ J^{(J,\Omega_k)} \right]$$

où $\Omega_k$ est l'ensemble des indices des séquences dudit ensemble prédéterminé, $\Omega_j$ est l'ensemble des indices des séquences disponibles, et $J^{(j,\Omega_k)}$ est ladite fonction représentative de l'interférence.

**6.** Procédé d'attribution selon une des revendications 1 à 4, **caractérisé en ce qu'**il consiste à attribuer, à chaque utilisateur, au moins une séquence d'étalement de manière à tenir compte de la qualité de transmission envisagée pour cette séquence ou ces séquences.

**7.** Procédé d'attribution selon la revendication 6, **caractérisé en ce qu'**il consiste à attribuer, à un utilisateur désirant une bonne qualité relative de transmission, la séquence d'étalement $c^{(i)}$ qui minimise la fonction de coût $J^{(j,\Omega_k)}$ avec les séquences d'étalement $c^{(k)}$ d'un ensemble prédéterminé ou déterminé de séquences d'indice $k$ appartenant à un ensemble $\Omega_k$, à un utilisateur désirant une qualité de transmission moyenne, la séquence d'étalement $c^{(i)}$ qui donne une valeur moyenne à la fonction de coût $J^{(j,\Omega_k)}$ avec les séquences d'étalement $c^{(k)}$ d'un ensemble prédéterminé ou déterminé de séquences d'indice $k$ appartenant à un ensemble $\Omega_k$ et à un utilisateur dont la qualité de transmission peut être minimum, une séquence d'étalement $c^{(i)}$ sans se soucier de la distorsion sur cette séquence.

**8.** Procédé d'attribution selon la revendication 5 ou 7, catactérisé en ce que la fonction de coût $J^{(j,\Omega_k)}$ représentative de l'interférence entre la séquence d'étalement $c^{(j)}$ et des séquences $c^{(k)}$ d'indices $k$ appartenant à un ensemble $\Omega_k$ est définie comme étant égale à la valeur maximale prise par une fonction $D^{(j,k)}$ représentative de la dégradation de la transmission qui est induite suite aux interférences entre la séquence d'étalement $c^{(j)}$ et la séquence d'étalement $c^{(k)}$ :

$$J^{(J,\Omega_k)} = \max_{k \in \Omega_k} D^{(J,k)}$$

**9.** Procédé d'attribution selon la revendication 5 ou 7, **caractérisé en ce que** la fonction de coût $J^{(j,\Omega_k)}$ représentative de l'interférence entre la séquence d'étalement $c^{(j)}$ et $K$ séquences $c^{(k)}$ d'indices $k$ appartenant à un ensemble $\Omega_k$ est définie comme étant égale à la moyenne des valeurs prises par une fonction $D^{(j,k)}$ représentative de la dégradation de la transmission qui est induite suite aux interférences entre la séquence d'étalement $c^{(j)}$ et la séquence $c^{(k)}$ :

$$J^{(J,\Omega_k)} = \frac{1}{K} \sum_{k \in \Omega_k} D^{(J,k)}$$

**10.** Procédé d'attribution selon la revendication 8 ou 9, **caractérisé en ce que** ladite fonction de dégradation $D^{(j,k)}$ est définie comme suit :

$$D^{(j,k)} = E\left[\left(\sum_{m=1}^{M} h'^{(j)}_m c^{(j)}_m c^{(k)}_m\right)^2\right] \text{ ou bien } D^{(j,k)} = E\left[\left(\sum_{m=1}^{M} h'^{(k)}_m c^{(j)}_m c^{(k)}_m\right)^2\right]$$

où $E$ est l'espérance mathématique, $M$ le nombre de sous-porteuses mises en oeuvre dans le système de transmission MC-CDMA et $h'^{(j)}_m$ est la réponse apparente du canal de transmission compte tenu d'un processus d'égalisation mis en oeuvre dans le récepteur, réponse pour la fréquence de la sous-porteuse de rang $m$ et pour le récepteur de l'utilisateur de la séquence de rang $j$.

**11.** Procédé d'attribution selon la revendication 8 ou 9, **caractérisé en ce que** ladite fonction de dégradation $D^{(j,k)}$ est représentative de la faible importance des composantes haute fréquence d'une séquence $\chi^{(j,k)}$ de $N$ éléments résultant du produit élément à élément de la séquence $c^{(j)}$ avec la séquence $c^{(k)}$.

**12.** Procédé d'attribution selon la revendication 11, **caractérisé en ce que** la valeur de ladite fonction de dégradation $D^{(j,k)}$ est donnée par l'application d'une transformée de Fourier à ladite séquence $\chi^{(j,k)}$ de $N$ éléments résultant du produit élément à élément de la séquence $c^{(j)}$ avec la séquence $c^{(k)}$.

**13.** Procédé d'attribution selon la revendication 11, **caractérisé en ce que** la valeur de ladite fonction de dégradation $D^{(j,k)}$ est donnée par le nombre de transitions {+1,-1} et {-1,+1} apparaissant dans ladite séquence $\chi^{(j,k)}$ de $N$ éléments résuttant du produit élément à élément de la séquence $c^{(j)}$ avec la séquence $c^{(k)}$.

**14.** Procédé d'attribution selon une des revendications précédentes, **caractérisé en ce qu'**il est mis en oeuvre dynamiquement et consiste donc à ré-attribuer en cours de transmission, à des moments prédéterminés, les K-Q séquences encore nécessaires pour les différentes transmissions, K étant le nombre de séquences d'étalement préalablement utilisées avant que Q séquences parmi K (Q<K) aient été rendues disponibles.

**15.** Procédé d'attribution selon la revendication 14, **caractérisé en ce qu'**il consiste à :

- Calculer les fonctions de coût $J^{(j,\Omega_k)}$ pour toute séquence d'étalement $c^{(j)}$ où $j$ appartient à l'ensemble $\Omega_Q$ des indices des séquences rendues disponibles,
- Calculer les fonctions de coût $J^{(k,\Omega_k)}$ pour toute séquence d'étalement $c^{(k)}$ où $k$ appartient à $\Omega_{K-Q}$ des indices des séquences encore utilisées,
- Tant qu'il existe une ou plusieurs séquences d'étalement d'indice $j_0 \in \Omega_Q$ et une ou plusieurs séquences d'étalement d'indice $k_0 \in \Omega_{K-Q}$ telles que $J^{(j_0,\Omega_k)} < J^{(k_0,\Omega_k)}$, désallouer la séquence $c^{(k_M)}$ définie par :

$$k_M = \arg_k \max_{k \in \Omega_{K-Q}} \left[J^{(k,\Omega_k)}\right],$$

et allouer à la place la séquence $c^{(k_m)}$ définie par :

$$k_m = \arg_k \min_{k \in \Omega_Q} \left[J^{(k,\Omega_k)}\right]$$

**16.** Procédé d'attribution selon la revendication 14, **caractérisé en ce qu'**il consiste à

- Calculer les fonctions de coût $J^{(j,i_0)}$ pour toute séquence d'étalement $c^{(j)}$ où $j$ appartient à l'ensemble $\Omega_Q$ des indices des séquences rendues disponibles,
- Calculer les fonctions de coût $J^{(k,i_0)}$ pour toute séquence d'étalement $c^{(k)}$ où $k$ appartient à $\Omega_{K-Q}$ des indices des séquences encore utilisées,
- Tant qu'il existe une ou plusieurs séquences d'étalement d'indice $j_0 \in \Omega_Q$ et une ou plusieurs séquences d'étalement d'indice $k_0 \in \Omega_{K-Q}$ telles que $J^{(j_0,i_0)} < J^{(k_0,i_0)}$, desallouer la séquence $c^{(k_M)}$ définie par :

$$k_M = \arg\ \max_{k \in \Omega_{K-Q}} \left[ J^{(k,i_0)} \right],$$

et allouer à la place la séquence $c^{(k_m)}$ définie par :

$$k_m = \arg\ \min_{k \in \Omega_Q} \left[ J^{(k,i_0)} \right]$$

**17.** Emetteur d'un système de transmission à porteuses multiples et à accès multiples par répartition de codes, ledit émetteur comportant des moyens pour multiplier une donnée utilisateur par chacun des éléments d'au moins une séquence d'étalement et des moyens pour moduler sur une sous-porteuse chacun des signaux issus desdits moyens de multiplication, **caractérisé en ce qu'**il comporte des moyens d'attribution à un utilisateur d'au moins une séquence d'étalement, lesdits moyens d'attribution étant prévus pour mettre en oeuvre toutes les étapes d'un des procédés selon une des revendications 1 à 16.

**Patentansprüche**

**1.** Verfahren zur Zuweisung einer oder mehrerer Dehnungssequenzen zu einem Benutzer eines Mehrbandübertragungsnetzes mit Codemultiplex-Vielfachzugriff, wobei jedes Element der Sequenz im Bereich eines Senders des Netzes mit einem zu übertragenden Datum multipliziert und anschließend auf einer entsprechenden Hilfsträgerwelle übertragen wird, **dadurch gekennzeichnet, daß** es darin besteht, dem Benutzer die Dehnungssequenz(en) zuzuweisen, die eine für die Interferenz zwischen der oder den Sequenz(en) einerseits und den Dehnungssequenzen einer vorbestimmten Gesamtheit andererseits repräsentative Funktion minimiert.

**2.** Zuweisungsverfahren nach Anspruch 1, **dadurch gekennzeichnet, daß** die vorbestimmte Gesamtheit von Dehnungssequenzen die Gesamtheit der Sequenzen enthält, die zum Zeitpunkt der Zuweisung vom Netz verwendet werden.

**3.** Zuweisungsverfahren nach Anspruch 1 oder 2, **dadurch gekennzeichnet, daß** die vorbestimmte Gesamtheit von Dehnungssequenzen die Gesamtheit der Sequenzen enthält, die nach dem Zeitpunkt der Zuweisung potentiell verwendbar sind.

**4.** Zuweisungsverfahren nach Anspruch 1, 2 oder 3, **dadurch gekennzeichnet, daß** die vorbestimmte Gesamtheit von Dehnungssequenzen die Gesamtheit der Sequenzen enthält, deren Übertragung begünstigt werden soll.

**5.** Zuweisungsverfahren nach einem der vorhergehenden Ansprüche, **dadurch gekennzeichnet, daß** es darin besteht, unter allen zum Zeitpunkt der Zuweisung verfügbaren Dehnungssequenzen die Dehnungssequenz $c^{(i)}$ zuzuordnen, die die für die Interferenz zwischen der Dehnungssequenz $c^{(i)}$ und den Dehnungssequenzen der vorbestimmten Gesamtheit repräsentative Funktion minimiert, wobei die Sequenz des Ranges i somit zugewiesen wird, wenn dieser Rang i folgende Beziehung verifiziert:

$$i = \arg\ \min_{j \in \Omega_j, j \in \Omega_k} \left[ J^{(j,\Omega_k)} \right]$$

wobei $\Omega_k$ die Gesamtheit der Indizes der Sequenzen der vorbestimmten Gesamtheit, $\Omega_j$ die Gesamtheit der Indizes der verfügbaren Sequenzen und $J^{(j,\Omega_k)}$ die für die Interferenz repräsentative Funktion ist.

**6.** Zuweisungsverfahren nach einem der Ansprüche 1 bis 4, **dadurch gekennzeichnet, daß** es darin besteht, jedem Benutzer mindestens eine Dehnungssequenz zuzuweisen, um die für diese Sequenz oder diese Sequenzen vorgesehene Übertragungsqualität zu berücksichtigen.

7. Zuweisungsverfahren nach Anspruch 6, **dadurch gekennzeichnet, daß** es darin besteht, einem Benutzer, der eine gute Qualität hinsichtlich der Übertragung wünscht, die Dehnungssequenz $c^{(i)}$ zuzuweisen, die die Aufwands- bzw. Kostenfunktion $J^{(j,\Omega_k)}$ mit den Dehnungssequenzen $c^{(k)}$ einer vorbestimmten oder bestimmten Gesamtheit von Sequenzen mit dem Index k, die einer Gesamtheit $\Omega_k$ angehören, minimiert, einem Benutzer, der eine durchschnittliche Übertragungsqualität wünscht, die Dehnungssequenz $c^{(i)}$ zuzuweisen, die einen durchschnittlichen Wert für die Funktion $J^{(j,\Omega_k)}$ mit den Dehnungssequenzen $c^{(k)}$ einer vorbestimmten oder bestimmten Gesamtheit von Sequenzen mit dem Index k, die einer Gesamtheit $Q_k$ angehören, ergibt, und einem Benutzer, für den die Übertragungsqualität minimal sein kann, eine Dehnungssequenz $c^{(i)}$ zuzuweisen, ohne sich um die Verzerrung auf dieser Sequenz zu kümmern.

8. Zuweisungsverfahren nach Anspruch 5 oder 7, **dadurch gekennzeichnet, daß** die Aufwands- bzw. Kostenfunktion $J^{(j,\Omega_k)}$, die für die Interferenz zwischen der Dehnungssequenz $c^{(i)}$ und Sequenzen $c^{(k)}$ mit den Indizes k, die einer Gesamtheit $Q_k$ angehören, repräsentativ ist, als gleich dem maximalen Wert definiert ist, der von einer Funktion $D^{(j,k)}$ angenommen wird, die für die Übertragungsverschlechterung repräsentativ ist, die nach Interferenzen zwischen der Dehnungssequenz $c^{(i)}$ und der Dehnungssequenz $c^{(k)}$ hervorgerufen wird:

$$J^{(j,\Omega_k)} = \max_{k \in \Omega_k} D^{(j,k)}$$

9. Zuweisungsverfahren nach Anspruch 5 oder 7, **dadurch gekennzeichnet, daß** die Kostenfunktion $J^{(j,\Omega_k)}$, die für die Interferenz zwischen der Dehnungssequenz $c^{(i)}$ und K Sequenzen $c^{(k)}$, die einer Gesamtheit $\Omega_k$ angehören, repräsentativ ist, als gleich dem Durchschnitt der Werte definiert ist, die von einer Funktion $D^{(j,k)}$ angenommen werden, die für die Übertragungsverschlechterung repräsentativ ist, die nach Interferenzen zwischen der Dehnungssequenz $c^{(i)}$ und der Dehnungssequenz $c^{(k)}$ hervorgerufen wird:

$$J^{(j,\Omega_k)} = \frac{1}{K} \sum_{k \in \Omega_k} D^{(j,k)}$$

10. Zuweisungsverfahren nach Anspruch 8 oder 9, **dadurch gekennzeichnet, daß** die Verschlechterungsfunktion $D^{(j,k)}$ folgendermaßen definiert ist:

$$D^{(j,k)} = E\left[\left(\sum_{m=1}^{M} h_m^{\prime(j)} c_m^{(j)} c_m^{(k)}\right)^2\right] \text{ oder } D^{(j,k)} = E\left[\left(\sum_{m=1}^{M} h_m^{\prime(k)} c_m^{(j)} c_m^{(k)}\right)^2\right]$$

wobei E die mathematische Hoffnung bzw. Erwartung, M die Anzahl von Hilfsträgerwellen, die in dem Übertragungssystem MC-CDMA eingesetzt werden, und $h_m^{\prime(j)}$ die offensichtliche bzw. scheinbare Antwort des Übertragungskanals unter Berücksichtigung eines Ausgleichsverfahrens ist, das in dem Empfänger eingesetzt wird, eine Antwort für die Frequenz der Hilfsträgerwelle des Ranges m und für den Empfänger des Benutzers der Sequenz des Ranges j.

11. Zuweisungsverfahren nach Anspruch 8 oder 9, **dadurch gekennzeichnet, daß** die Verschlechterungsfunktion $D^{(j,k)}$ für die geringe Bedeutung der Hochfrequenzkomponente einer Sequenz $\chi^{(j,k)}$ von N Elementen repräsentativ ist, die sich aus dem Produkt Element mal Element der Sequenz $c^{(i)}$ mit der Sequenz $c^{(k)}$ ergeben.

12. Zuweisungsverfahren nach Anspruch 11, **dadurch gekennzeichnet, daß** die Verschlechterungsfunktion $D^{(j,k)}$ durch die Anwendung einer Fouriertransformation auf die Sequenz $\chi^{(j,k)}$ von N Elementen gegeben ist, die sich aus dem Produkt Element mal Element der Sequenz $c^{(i)}$ mit der Sequenz $c^{(k)}$ ergeben.

**13.** Zuweisungsverfahren nach Anspruch 11, **dadurch gekennzeichnet, daß** der Wert der Verschlechterungsfunktion $D^{(j,k)}$ durch die Anzahl von Übergängen $\{+1,-1\}$ und $\{-1,+1\}$ gegeben ist, die in der Sequenz $\chi^{(j,k)}$ von N Elementen erscheinen, die sich aus dem Produkt Element mal Element der Sequenz $c^{(i)}$ mit der Sequenz $c^{(k)}$ ergeben.

**14.** Zuweisungsverfahren nach einem der vorhergehenden Ansprüche, **dadurch gekennzeichnet, daß** es dynamisch eingesetzt wird und somit darin besteht, während der Übertragung zu vorbestimmten Zeitpunkten die K-Q Sequenzen, die noch für die verschiedenen Übertragungen erforderlich sind, wieder zuzuweisen, wobei K die Anzahl von zuvor verwendeten Dehnungssequenzen, bevor Q Sequenzen von K (Q<K) zu Verfügung gestellt wurden, ist.

**15.** Zuweisungsverfahren nach Anspruch 14, **dadurch gekennzeichnet, daß** es darin besteht:

- die Kostenfunktionen $J^{(j,\Omega_k)}$ für jede Dehnungssequenz $c^{(j)}$ zu berechnen, wobei j der Gesamtheit $\Omega_Q$ der Indizes der zur Verfügung gestellten Sequenzen angehört,
- die Kostenfunktionen $J^{(k,\Omega_k)}$ für jede Dehnungssequenz $c^{(k)}$ zu berechnen, wobei k der Gesamtheit $\Omega_{K-Q}$ der Indizes der noch verwendeten Sequenzen angehört,
- solange eine oder mehrere Dehnungssequenzen mit dem Index $j_0 \in \Omega_Q$ und eine oder mehrere Dehnungssequenzen mit dem Index $k_0 \in \Omega_{K-Q}$, wie beispielsweise $J^{(j_0,\Omega_k)}<J^{(k_0,\Omega_k)}$, vorhanden sind, die Sequenz $c^{(k_M)}$ nicht zuzuweisen, die definiert ist durch:

$$k_M = \arg_k \ \min_{k\in\Omega_{K-Q}} \left\lfloor J^{(k,\Omega_k)} \right\rfloor$$

und an ihrer Stelle die Sequenz $c^{(k_m)}$ zuzuweisen, die definiert ist durch:

$$k_m = \arg_k \ \min_{k\in\Omega_Q} \left\lfloor J^{(k,\Omega_k)} \right\rfloor$$

**16.** Zuweisungsverfahren nach Anspruch 14, **dadurch gekennzeichnet,** das es darin besteht:

- die Kostenfunktionen $J^{(j,i_0)}$ für jede Dehnungssequenz $c^{(j)}$ zu berechnen, wobei j der Gesamtheit $\Omega_Q$ der Indizes der zur Verfügung gestellten Sequenzen angehört,
- die Kostenfunktionen $J^{(k,i_0)}$ für jede Dehnungssequenz $c^{(k)}$ zu berechnen, wobei k der Gesamtheit $\Omega_{K-Q}$ der Indizes der noch verwendeten Sequenzen angehört,
- solange eine oder mehrere Dehnungssequenzen mit dem Index $j_0 \in \Omega_Q$ und eine oder mehrere Dehnungssequenzen mit dem Index $k_0 \in \Omega_{K-Q}$, wie beispielsweise $J^{(j_0,i_0)}<J^{(k_0,i_0)}$, vorhanden sind, die Sequenz $c^{(k_M)}$ nicht zuzuweisen, die definiert ist durch:

$$k_M = \arg_k \ \min_{k\in\Omega_{K-Q}} \left\lfloor J^{(k,j_0)} \right\rfloor$$

und an ihrer Stelle die Sequenz $c^{(k_m)}$ zuzuweisen, die definiert ist durch:

$$k_m = \arg_k \ \min_{k\in\Omega_Q} \left\lfloor J^{(k,j_0)} \right\rfloor$$

**17.** Sender eines Mehrbandübertragungssystems mit Codemultiplex-Vielfachzugriff, welcher Sender Mittel zum Multiplizieren eines Benutzerdatums mit jedem der Elemente von mindestens einer Dehnungssequenz und Mittel zum Modulieren jedes der von den Multiplikationsmitteln ausgehenden Signale auf einer Hilfsträgerwelle umfasst, **dadurch gekennzeichnet, daß** er Mittel zur Zuweisung mindestens einer Dehnungssequenz für einen Benutzer umfasst, welche Zuweisungsmittel dazu vorgesehen sind, alle Schritte eines der Verfahren nach einem der Ansprüche 1 bis 16 einzusetzen.

**Claims**

1. Method of assigning one or more spreading sequences to a user of a Multi-Carrier Code Division Multiple Access transmission network, each element of the said sequence being, at the level of a transmitter of the said network, multiplied by a data item to be transmitted and then transmitted on a corresponding sub-carrier, **characterised in that** it consists of assigning, to the said user, the said spreading sequence or sequences, minimising a function representing the interference between said sequence or sequences, on the one hand, and the spreading sequences of a predetermined set, on the other hand.

2. Assigning method according to claim 1, **characterised in that** the said predetermined set of spreading sequences includes the set of sequences which are used by the said network at the instant of the assigning.

3. Assigning method according to claim 1 or 2, **characterised in that** the said predetermined set of spreading sequences includes the set of sequences which are potentially usable after the instant of the assigning.

4. Assigning method according to claim 1, 2 or 3, **characterised in that** the said predetermined set of spreading sequences includes the set of sequences whose transmission it is wished to favour.

5. Assigning method according to one of the preceding claims, **characterised in that** it consists of allocating, from among all the spreading sequences available at the instant of the assigning, the spreading sequence $c^{(i)}$ which minimises the said function representing the interference between the spreading sequence $c^{(i)}$ and the spreading sequences of the said predetermined set, the sequence of rank $i$ thus being assigned if this rank $i$ verifies the following relationship :

$$i = \arg_{j} \min_{j \in \Omega_j, j \notin \Omega_k} \left[ J^{(j, \Omega_k)} \right]$$

where $\Omega_k$ is the set of the indices of the sequences of the said predetermined set, $\Omega_j$ is the set of the indices of the available sequences, and $J^{(j, \Omega_k)}$ is the said function representing the interference.

6. Assigning method according to one of claims 1 to 4, **characterised in that** it consists of assigning, to each user, at least one spreading sequence so as to take into account the transmission quality envisaged for this sequence or these sequences.

7. Assigning method according to claim 6, **characterised in that** it consists of assigning, to a user desiring a good relative transmission quality, the spreading sequence $c^{(i)}$ which minimises the cost function $J^{(j, \Omega_k)}$ with the spreading sequences $c^{(k)}$ of a predetermined or given set of sequences of index $k$ belonging to a set $\Omega_k$, to a user desiring an average transmission quality, the spreading sequence $c^{(i)}$ which gives an average value to the cost function $J^{(j, \Omega_k)}$ with the spreading sequences $c^{(k)}$ of a predetermined or given set of sequences of index $k$ belonging to a set $\Omega_k$ and, to a user whose transmission quality can be a minimum, a spreading sequence $c^{(i)}$ without worrying about the distortion on this sequence.

8. Assigning method according to claim 5 or 7, **characterised in that** the cost function $J^{(j, \Omega_k)}$ representing the interference between the spreading sequence $c^{(j)}$ and sequences $c^{(k)}$ of indices $k$ belonging to a set $\Omega_k$ is defined as being equal to the maximum value taken by a function $D^{(j, k)}$ representing the degradation of the transmission which is induced as a result of the interference between the spreading sequence $c^{(j)}$ and the spreading sequence $c^{(k)}$ :

$$J^{(j,\Omega_k)} = \max_{k \in \Omega_k} D^{(j,k)}$$

**9.** Assigning method according to claim 5 or 7, **characterised in that** the cost function $J^{(j,\Omega_k)}$ representing the interference between the spreading sequence $c^{(j)}$ and $K$ sequences $c^{(k)}$ of indices $k$ belonging to a set $\Omega_k$ is defined as being equal to the average of the values taken by a function $D^{(j,k)}$ representing the degradation of the transmission which is induced as a result of the interference between the spreading sequence $c^{(j)}$ and the sequence $c^{(k)}$ :

$$J^{(j,\Omega_k)} = \frac{1}{K} \sum_{k \in \Omega_k} D^{(j,k)}$$

**10.** Assigning method according to claim 8 or 9, **characterised in that** the said degradation function $D^{(j,k)}$ is defined as follows :

$$D^{(j,k)} = E\left[\left(\sum_{m=1}^{M} h'^{(j)}_m c^{(j)}_m c^{(k)}_m\right)^2\right] \text{ or } D^{(j,k)} = E\left[\left(\sum_{m=1}^{M} h'^{(k)}_m c^{(j)}_m c^{(k)}_m\right)^2\right]$$

where $E$ is the mathematical expectation, $M$ the number of sub-carriers used in the MC-CDMA transmission system and $h'^{(j)}_m$ is the apparent response of the transmission channel in view of an equalisation process implemented in the receiver, the response for the frequency of the sub-carrier of rank $m$ and for the receiver of the user of the sequence of rank $j$.

**11.** Assigning method according to claim 8 or 9, **characterised in that** the said degradation function $D^{(j,k)}$ represents the small size of the high-frequency components of a sequence $\chi^{(j,k)}$ of $N$ elements resulting from the element-by-element product of the sequence $c^{(j)}$ and the sequence $c^{(k)}$.

**12.** Assigning method according to claim 11, **characterised in that** the value of the said degradation function $D^{(j,k)}$ is given by the application of a Fourier transform to the said sequence $\chi^{(j,k)}$ of $N$ elements resulting from the element-by-element product of the sequence $c^{(j)}$ and the sequence $c^{(k)}$.

**13.** Assigning method according to claim 11, **characterised in that** the value of the said degradation function $D^{(j,k)}$ is given by the number of {+1,-1} and {-1,+1} transitions appearing in the said sequence $\chi^{(j,k)}$ of $N$ elements resulting from the element-by-element product of the sequence $c^{(j)}$ and the sequence $c^{(k)}$.

**14.** Assigning method according to one of the preceding claims, **characterised in that** it is implemented dynamically and therefore consists of re-assigning during transmission, at predetermined instants, the K-Q sequences still necessary for the different transmissions, K being the number of spreading sequences used previously before Q sequences from among K (Q<K) were made available.

**15.** Assigning method according to claim 14, **characterised in that** it consists of :

- Calculating the cost functions $J^{(j,\Omega_k)}$ for any spreading sequence $c^{(j)}$ where $j$ belongs to the set $\Omega_Q$ of the indices of the sequences made available,
- Calculating the cost functions $J^{(k,\Omega_k)}$ for any spreading sequence $c^{(k)}$ where $k$ belongs to $\Omega_{K-Q}$ of the indices of the sequences still used,
- As long as there exists one or more spreading sequences of index $j_0 \in \Omega_Q$ and one or more spreading sequences of index $k_0 \in \Omega_{K-Q}$ such that $J^{(j_0,\Omega_k)} < J^{(k_0,\Omega_k)}$, de-allocating the sequence $c^{(k_M)}$ defined by :

$$k_M = \arg \max_{k \in \Omega_{K-Q}} \left[ J^{(k,\Omega_k)} \right],$$

and allocating instead the sequence $c^{(k_m)}$ defined by :

$$k_m = \arg \min_{k \in \Omega_Q} \left[ J^{(k,\Omega_k)} \right.$$

**16.** Assigning method according to claim 14, **characterised in that** it consists of :

- Calculating the cost functions $J^{(j,i_0)}$ for any spreading sequence $c^{(j)}$ where $j$ belongs to the set $\Omega_Q$ of the indices of the sequences made available,
- Calculating the cost functions $J^{(k,i_0)}$ for any spreading sequence $c^{(k)}$ where $k$ belongs to $\Omega_{K-Q}$ of the indices of the sequences still used,
- As long as these exists one or more spreading sequences of index $j_0 \in \Omega_Q$ and one or more spreading sequences of index $k_0 \in \Omega_{K-Q}$ such that $J^{(j_0,i_0)} < J^{(k_0,i_0)}$, de-allocating the sequence $c^{(k_M)}$ defined by :

$$k_M = \arg \max_{k \in \Omega_{K-Q}} \left[ J^{(k,i_0)} \right],$$

and allocating instead the sequence $c^{(k_m)}$ defined by :

$$k_m = \arg \min_{k \in \Omega_Q} \left[ J^{(k,i_0)} \right]$$

**17.** Transmitter of a Multi-Carrier Code Division Multiple Access transmission system, the said transmitter having means for multiplying a user data item by each of the elements of at least one spreading sequence and means for modulating on a sub-carrier each of the signals originating from the said multiplication means, **characterised in that** it has means of assigning, to a user, at least one spreading sequence, the said assigning means being provided for implementing all the steps of one of the methods according to one of claims 1 to 16.

Fig. 1

Amplitudes

| $c^{(1)}$ | +1 | +1 | +1 | +1 | +1 | +1 | +1 | +1 |
|---|---|---|---|---|---|---|---|---|
| $c^{(2)}$ | +1 | −1 | +1 | −1 | +1 | −1 | +1 | −1 |
| $c^{(3)}$ | +1 | +1 | −1 | −1 | +1 | +1 | −1 | −1 |

Fréquences $f_m$

$f_1$  $f_2$  $f_3$  $f_4$  $f_5$  $f_6$  $f_7$  $f_8$

Fig. 2

| | 1 | 2 | 3 | 4 | 5 | 6 | 7 | 8 |
|---|---|---|---|---|---|---|---|---|
| 1 | 0 | 7 | ③ | 4 | 1 | 6 | 2 | ⑤ |
| 2 | 7 | 0 | 4 | 3 | 6 | 1 | 5 | 2 |
| 3 | 3 | 4 | 0 | 7 | 2 | 5 | 1 | 6 |
| 4 | 4 | 3 | 7 | 0 | 5 | 2 | 6 | 1 |
| 5 | 1 | 6 | 2 | 5 | 0 | 7 | 3 | 4 |
| 6 | 6 | 1 | ⑤ | 2 | 7 | 0 | 4 | ③ |
| 7 | 2 | 5 | 1 | 6 | 3 | 4 | 0 | 7 |
| 8 | 5 | 2 | 6 | 1 | 4 | 3 | 7 | 0 |

Fig. 3